# EUROPEAN PATENT SPECIFICATION

(11) **EP 1 607 129 B1**
(45) Date of publication and mention of the grant of the patent: **21.11.2012**
(21) Application number: 04721000.0
(22) Date of filing: 16.03.2004
(51) Int. Cl.: B01D 39/20, B01D 46/00, B01D 29/25

(54) **CERAMIC FILTER**
KERAMIKFILTER
FILTRE CERAMIQUE

(30) Priority: 17.03.2003 JP 2003071746
(43) Date of publication of application: 21.12.2005
(73) Proprietor: NGK Insulators, Ltd., Nagoya-shi, Aichi 467-8530 (JP)
(72) Inventor: SHIMODAIRA, Takanao, c/o NGK Insulators, Ltd, Nagoya-shi, Aichi 4678530 (JP)
(74) Representative: TBK
(86) International application number: PCT/JP2004/003481
(87) International publication number: WO 2004/082807

(56) References cited:
- JP-A- 6 506 138
- JP-A- 61 033 209
- JP-A- 2001 232 625
- JP-A- 2001 269 921
- JP-A- 2002 349 231

## Description

### Technical Field

The present invention relates to a ceramic filter for use in filtration of fluid such as liquid or gas, more particularly to a ceramic filter capable of easily removing a deposit on the filter by counter flow washing.

### Background Art

A ceramic filter is a filter utilizing a ceramic porous body, and is superior in physical strength, durability, corrosion resistance and the like. Therefore, the filter is used in removing suspension substances, bacteria, powder dust and the like in liquid or gas, for example, in water treatment, exhaust gas treatment, or broad fields such as pharmaceutical and food fields.

In the ceramic filter, the ceramic porous body is used as a filtering material as such in some cases, but, in general, on the surface of the porous body (substrate) made of a ceramic, a filtration membrane made of the ceramic in the same manner is formed in order to enhance both filtering performance and a fluid permeation amount (i.e., treatment ability). For example, a mean pore diameter of the filtration membrane is constituted to be small at about 0.01 to 1.0 µm to secure the filtering performance, and the mean pore diameter of the substrate is constituted to be large at about 1 µm to several hundreds of micrometers so that a resistance to fluidity inside the substrate is lowered and that the fluid permeation amount (i.e., treatment ability) is enhanced.

Moreover, there are used ceramic filters whose substrates are worked into various shapes in accordance with a filtration purpose, and there is used a ceramic filter whose substrate is formed into a tubular shape having a single flow path or a honeycomb shape (including a monolith shape) having a large number of parallel flow paths. The filtration membrane is formed on the surface of the tubular or honeycomb-shaped substrate, for example, on an inner wall surface of the flow path. The filter is housed in a housing and is structured in such a manner that a substrate outer peripheral surface side is airtightly isolated from a substrate end face side, on which the flow paths open, via an O-ring or the like. Accordingly, the filter is utilized as a cross flow type or a dead end type.

As to such ceramic filter, there is a necessity of performing counter flow washing to periodically load the filter with pressure in a direction reverse to that at a usual use time, peel a trapped substance (deposit) deposited into a layer shape in the flow path from an inner wall of the flow path (cell), and discharge and remove the deposit from end portions of the flow path. However, there has been a problem that the end portions of the flow paths are easily clogged with the trapped substance to cause insufficient counter flow washing.

As a related art for solving this problem, and facilitating the discharge and removal of the deposit by the counter flow washing, there is disclosed a ceramic filter in which an opening diameter of at least one end portion of the flow path is formed to be large as compared with an inner diameter of a portion of the flow path other than the end portion (see, e.g., JP-A-2002-210314).

According to the ceramic filter disclosed in the JP-A-2002-210314, the clogging caused by the deposit in the cell end portion is easily eliminated. However, even in the ceramic filter described in Patent Document 1, there is sometimes left a cell (cell incapable of being counter flow-washed) in which the deposit is not easily peeled from the cell inner wall, and any deposit is not discharged although the counter flow washing is performed. To inhibit this cell incapable of being counter flow-washed from being left, it is supposed to be theoretically preferable to apply a more powerful counter flow washing pressure to the ceramic filter. However, there is a problem that there is a limitation to a counter flow washing pressure supply equipment which enables the applying, and therefore the applying is not practical.

Furthermore, a ceramic filter according to the preamble of claim 1 is known from JP-A-2002-349231.

### Disclosure of the Invention

The present invention has been made in view of the problem of the conventional technique and it is the object of the present invention to provide a ceramic filter capable of easily removing a deposit on the filter by counter flow washing.

According to the present invention, the above object is solved with a ceramic filter having the features of claim 1.

### Brief Description of the Drawings

FIGS. 1(a), 1(b) are diagrams showing one embodiment of a ceramic filter of the present invention. FIG. 1(a) is a perspective view, and FIG. 1(b) is a partially enlarged sectional view.
FIG. 2 is a perspective view showing another embodiment of a ceramic filter of the present invention.
FIG. 3 is a diagram schematically showing one example of a membrane producing method.
FIG. 4 is a schematic sectional view of a ceramic filter housed in a housing.
FIG. 5 is a graph showing counter flow washing results of the ceramic filter of Example 1, in which the number of main flow paths is plotted with respect to a value of "{(A-B)/B}×100".
FIG. 6 is a graph showing counter flow washing results of the ceramic filter of Example 2, in which the number of the main flow paths is plotted with respect to the value of "{(A-B)/B}×100".
FIG. 7 is a graph showing counter flow washing results of the ceramic filter of Example 3, in which the number of the main flow paths is plotted with respect to the value of "{(A-B)B}×100".
FIG. 8 is a graph showing counter flow washing results of the ceramic filter of Example 4, in which the number of the main flow paths is plotted with respect to the value of "{(A-B)/B}×100".
FIG. 9 is a graph showing counter flow washing results of the ceramic filter of Example 5, in which the number of the main flow paths is plotted with respect to the value of "{(A-B)/B}×100".
FIG. 10 is a graph showing counter flow washing results of the ceramic filter of Comparative Example 1, in which the number of the main flow paths is plotted with respect to the value of "{(A-B)/B}×100".

### Best Mode for Carrying out the Invention

A best mode for carrying out the present invention will be described hereinafter. However, it should be understood that the present invention is not limited to the following embodiment, and design may appropriately be modified, or improved based on ordinary knowledge of a person skilled in the art without deviating from the gist of the present invention.

In the present invention, there is provided a ceramic filter comprising: a porous body having two end faces and an outer peripheral surface and having a plurality of main flow paths for fluid to be purified which extend from one end face to the other end face; and filtration membranes arranged on inner wall surfaces of the main flow paths, the fluid to be purified that flows into the filter from first opening portions of the main flow paths being allowed to permeate the inside of the porous body to be thereby purified, and being taken out as purified fluid from the outer peripheral surface of the porous body, wherein diameters of the main flow paths in a cross section perpendicular to a flowing direction of the fluid to be purified are gradually reduced from opening diameters of the first opening portions to those of second opening portions. A mode for carrying out the present invention will be hereinafter described specifically.

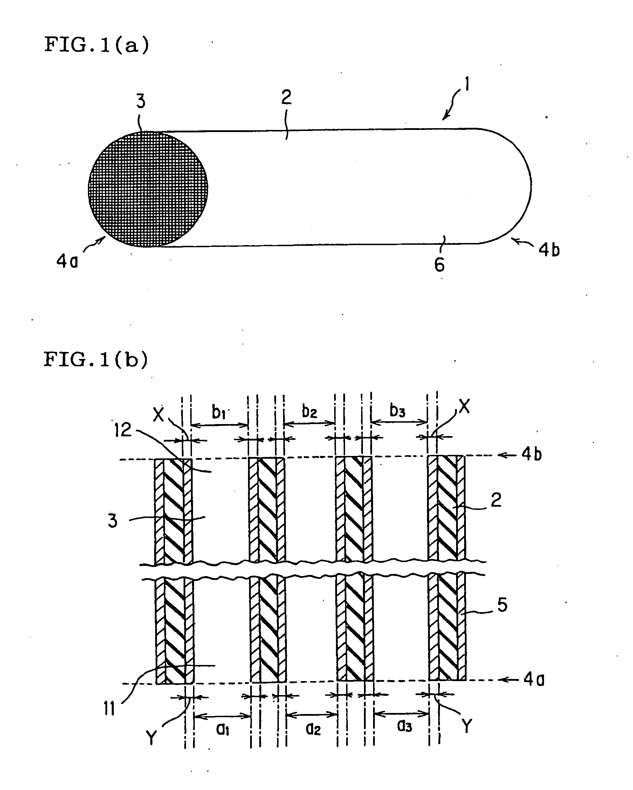

FIGS. 1 (a), 1 (b) are diagrams showing one embodiment of a ceramic filter of the present invention. FIG. 1(a) is a perspective view, and FIG. 1(b) is a partially enlarged sectional view. A ceramic filter 1 of the present embodiment comprises: a porous body 2 in which a plurality of main flow paths 3 extend from one end face 4a to the other end face 4b; and filtration membranes 5 arranged on inner wall surfaces of the main flow paths 3. When fluid such as liquid or gas is filtered and purified using this ceramic filter 1, the fluid to be purified is allowed to flow in the filter from opening portions (first opening portions 11) of the main flow paths 3 in the one end face 4a and to permeate the inside of the porous body 2 to be thereby purified and is taken out as purified fluid from an outer peripheral surface 6 of the porous body 2.

When the filtration of the fluid to be purified is repeated, a deposit which is a trapped substance is deposited into a layer shape on the surface of the filtration membrane 5. Therefore, counter flow washing needs to be periodically performed to load the filter with a counter flow washing pressure in a direction reverse to that at a usual use time and discharge and remove the deposit in the main flow path 3. Here, in the ceramic filter 1 of the present embodiment, as to diameters of the flow paths in a cross section perpendicular to a flowing direction of the fluid to be purified, that is, a direction from the one end face 4a to the other end face 4b, the diameters are gradually reduced from opening diameters of the first opening portions 11 to those of second opening portions 12. Therefore, even in a case where the counter flow washing is performed to load the ceramic filter 1 with a usual counter flow washing pressure by the use of a general pressure supply equipment, the deposit can easily be discharged from the first opening portions 11 (one end face 4a). It is possible to sharply reduce a possibility that main flow paths (blocked main flow paths) incapable of being counter flow-washed remain with the paths being blocked without discharging any deposit and lack in filtering functions. Incidentally, the "diameter of the main flow path in the cross section perpendicular to the flowing direction of the fluid to be purified " mentioned in the present invention refers to a diameter in a case where the cross section is circular, a length of a long axis in a case where the cross section is elliptical or oval, a length of a longest diagonal line in a case where the cross section is polygonal, or a longest distance between two points taken on an outer periphery of a sectional shape in a case where the cross section is amorphous.

Moreover, as shown in FIG. 1 (b), in the ceramic filter of the present embodiment, an average value (A) of the opening diameters (a₁, a₂, a₃) of the first opening portions 11 and an average value (B) of the opening diameters (b₁, b₂, b₃) of the second opening portions 12 of the main flow paths 3 preferably satisfy a relation of (A-B)/B≥0.025, further preferably satisfy a relation of (A-B)/B≥0.027, especially preferably satisfy a relation of (A-B)/B≥0.028. When the value of "(A-B)/B" is less than 0.025, a remaining ratio of the blocked main flow paths unfavorably rises even by the counter flow washing. Incidentally, in the present invention, there is not any special limitation as to the upper limit value of "(A-B)/B", and the value may be 1.5 or less from the viewpoints of substantial manufacturability, usability and the like.

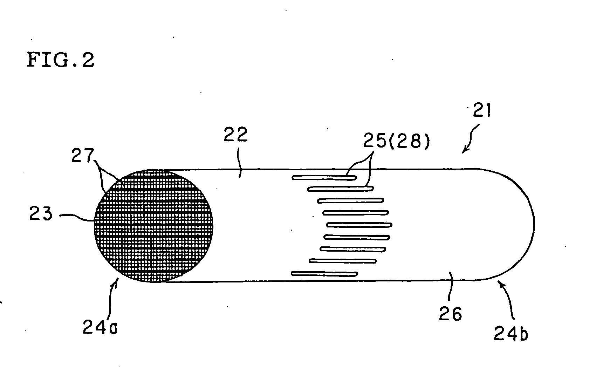

FIG. 2 is a perspective view showing another embodiment of a ceramic filter of the present invention. As shown in FIG. 2, in a ceramic filter 21 of the present embodiment, it is preferable that slit-shaped auxiliary flow paths 25 are formed in portions including an outer peripheral surface 26 of a porous body 22 so that a specific main flow path communicates with an external space, that opening portions of opposite end faces of the specific main flow path are sealed, and that fluid to be purified that has flown in a main flow path 23 from the opening portions in one end face 24a is allowed to permeate the inside of the porous body 22 to thereby purify the fluid and is taken out as purified fluid from the outer peripheral surface 26 of the porous body 22 and exits 28 of the auxiliary flow paths. The ceramic filter 21 of the present embodiment, in which the predetermined auxiliary flow paths 25 are provided, is preferable in that it is easy to recover the purified fluid from the main flow path 23 in the vicinity of a central portion of the porous body 22, and a filtering process ability of the ceramic filter 21 can greatly be enhanced to 10 times or more. The filter is also preferable in that a flow rate distribution in the ceramic filter 21 and a counter flow washing pressure distribution at a counter flow washing time can largely be improved.

Next, a method of manufacturing a ceramic filter of the present invention will be described. The ceramic filter of the present invention can be manufactured in conformity to a conventional known method of manufacturing a ceramic filter. First, in addition to an aggregate and a sintering assistant, a dispersion medium and an organic binder are added, and if necessary, a surfactant, a plasticizer and the like are added, and clay obtained by kneading materials is extruded to obtain a formed body. The aggregate is the main constituent of the porous body, and is constituted by ceramic particles having an average particle diameter of about 5 to 200 µm. The aggregate-containing clay is formed and fired to obtain the porous body having pores in accordance with particle diameters of the aggregate. The material of the aggregate may appropriately be selected in such a manner as to be adapted to a purpose of filtration. For example, alumina, mullite, cordierite, silicon carbide, pottery scrap or the like can be used.

Moreover, the sintering assistant is an additive material for reinforcing bonding between the aggregates, and is constituted by ceramic particles having an average particle diameter of less than 5 µm. When the assistant is added to the clay together with the aggregate, the bonding between the aggregates is strengthened, and a solid porous body is formed. There is not any special limitation to the material of the sintering assistant, and, for example, alumina, silica, zirconia, titania, glass frit, feldspar, cordierite or the like can be used. Usually, about 10 to 35 mass% of the assistant may be added with respect to a total mass of the aggregate and the sintering assistant in order to secure the bonding strength between the aggregates, and inhibit the pores of the porous body from being blocked.

The formed body obtained by the extrusion is dried, cut into a predetermined length perpendicularly to a flowing direction, and fired to obtain the porous body. Incidentally, a mean pore diameter of the resultant porous body is about 1 to 30 µm. Subsequently, filtration membranes are provided on inner wall surfaces of main flow paths of the resultant porous body. Here, the filtration membranes mentioned in the present invention refer to thin-membrane-like ceramic porous bodies having a small mean pore diameter as compared with the porous body and may have a composite layer structure in which two or more layers are provided as the case may be. In general, the filtration membranes refer to members for securing a filtering function of the ceramic filter, and the filtration membranes mentioned in the present invention include intermediate layers (layers other than the uppermost layer) in a case where the composite layer structure is constituted.

The filtration membranes are provided on the inner wall surfaces of the main flow paths of the porous body using a slurry containing ceramic particles having an average particle diameter of about 0.1 to 5 µm, which is small as compared with the aggregate constituting the porous body and which is, and the membranes can be thereafter fired. Specifically, the ceramic particles are dispersed in a dispersion medium such as water, and the sintering assistant, the organic binder, a pH regulator, the surfactant or the like is added, if necessary, to prepare a slurry (slurry for membrane production) for the filtration membrane. After providing the membranes on the inner wall surfaces of the main flow paths using the slurry, the membranes are dried and fired to provide the filtration membranes. The mean pore diameter of the filtration membrane is about 0.1 to 5 µm.

The ceramic filter of the present invention is characterized in a structure in which the diameters of the main flow paths in the cross section perpendicular to the flowing direction of the fluid to be purified are gradually reduced from the opening diameters of the first opening portions to those of the second opening portions, a so-called tapered structure. In order to constitute such tapered structure, the porous body may be extruded into a tapered shape. From the viewpoints of ease of manufacturing and the like, it is preferable to gradually reduce membrane thicknesses of the filtration membranes provided on the inner wall surfaces of the main flow paths from the second opening portions toward the first opening portions so that the opening diameters are adjusted to constitute the tapered structure. A method of forming the filtration membrane will be described hereinafter.

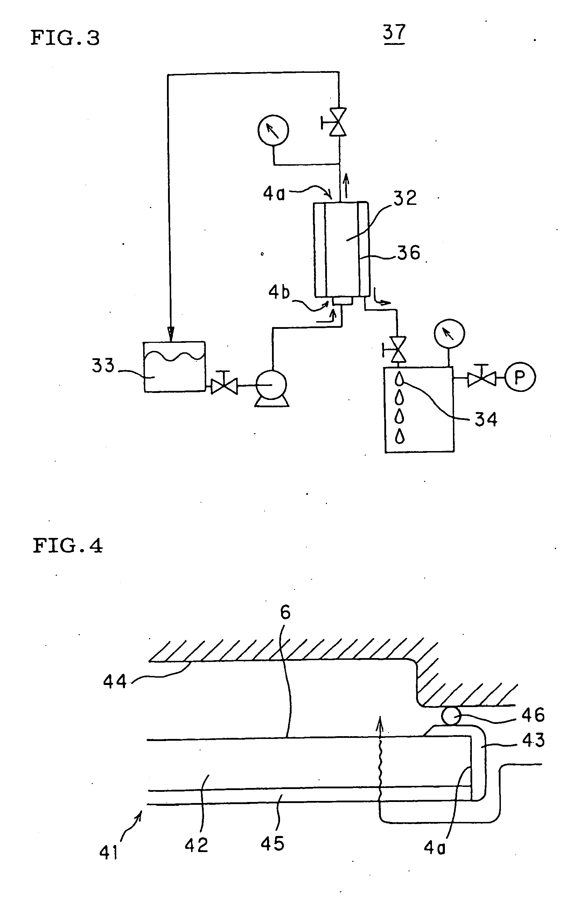

As a method of gradually reducing the membrane thicknesses of the filtration membranes from the second opening portions toward the first opening portions, for example, there is a method using a membrane production apparatus 37 shown in FIG. 3. Specifically, the aforementioned slurry 33 for membrane production is prepared, the slurry 33 for membrane production is circulated from the other end face 4b toward the one end face 4a of a porous body 32, and substantially simultaneously a pressure on an outer peripheral surface 36 side is reduced by a vacuum pump P. A solid content contained in the slurry 33 for membrane production is then deposited into a layer shape on the inner wall surfaces of the main flow paths to form membrane layers. Here, when the slurry 33 for membrane production is circulated, as a circulation flux is smaller, and a pressure reduction degree on the outer peripheral surface side is larger, a difference in membrane thickness of the produced membrane layer increases between both opening portions. Therefore, when the circulation flux of the slurry 33 for membrane production and the pressure reduction degree are controlled, the membranes can be provided so that the membrane thicknesses of the filtration membranes gradually decrease from the second opening portions toward the first opening portions.

When the pressure is reduced substantially simultaneously with the circulation of the slurry 33 for membrane production, the produced membrane layers are provided so that the membrane thicknesses gradually decrease from the other end face 4b in which the slurry 33 for membrane production flows toward the one end face 4a. Filtered water 34 is discharged from the outer peripheral surface 36 of the porous body 32 by an amount corresponding to a desired membrane thickness of the whole produced membrane layer. Incidentally, the slurry 33 for membrane production, which has flown out of the one end face 4a of the porous body 32, may be circulated. Thereafter, after the completion of the discharging of the filtered water 34, a pressure on a filtered water side is reduced for vacuum dewatering of the porous body 32 in order to maintain the shape of the produced membrane layer. Subsequently, the porous body can be dried and fired to thereby form the filtration membranes, and the ceramic filter of the present invention can be manufactured.

Furthermore, the ceramic filter of the present invention may be provided with a sealing material in a predetermined position as the case may be. The sealing material mentioned in the present invention refers to a member for preventing invasion of the fluid to be purified from the end face of the porous body, specifically one end face 4a in FIG. 1(b) to the inside of the porous body 2, and the material is preferably provided in such a manner as to coat the one end face 4a of the porous body 2 and the filtration membrane 5 in the vicinity of the one end face 4a.

The sealing material can be formed by applying a glaze consisting of a glass-like material (glass frit, etc.) such as borosilicate glass, silica glass, or feldspathic glass on the predetermined portion and fired. However, the sealing material is not limited to the glaze as long as the pore diameters are equal to or less than those of the filtration membranes. By forming the filtration membrane instead of the sealing material as the case may be, it is possible to prevent the fluid to be purified from flowing into the porous body from the end face of the porous body.

Moreover, a method of manufacturing the ceramic filter 21 in which the predetermined slit-shaped auxiliary flow paths 25 are formed will be described. To form the slit-shaped auxiliary flow paths 25, prior to or after the firing of the porous body 22, the porous body may be ruptured by a cutting tool such as a diamond electrodeposition cutter so that the rows of the specific main flow paths, in which the auxiliary flow paths 25 are to be formed, communicate with the external space. Here, as to the specific main flow paths communicating with the auxiliary flow paths 25, opening portions of both end faces of the porous body 22 are sealed by plugging members or the like to provide sealed portions 27 in order to prevent mixture of the fluid to be purified from mixing in the purified fluid. That is, any filtration membrane does not have to be formed on the inner wall surfaces of the specific main flow channels.

Next, a method of using the ceramic filter of the present invention will be generally described in a case where water (water to be purified) is used as the fluid to be purified. As shown in FIG. 4, in a ceramic filter 41 of the present embodiment, a predetermined filtration membrane 45 is provided on an inner wall surface of a main flow path of a porous body 42, and one end face 4a of the porous body 2 and the filtration membrane 45 in the vicinity of the end face are coated with a sealing material 43. The filter is housed in a housing 44 via an O-ring 46 in a sealing material 43 portion. When the water to be filtered is purified using the ceramic filter 41, the water to be purified is allowed to flow in the main flow path from a first opening portion in the one end face 4a and permeate the filtration membrane 45 and the porous body 42 to thereby purify the water, and the water is taken out as purified water from an outer peripheral surface 6 of the porous body 42.

Since a deposit is deposited into layers on the surface of the filtration membrane 45 accompanying repeating of the filtration, the filter is periodically loaded with a counter flow washing pressure in a direction reverse to that at a usual use time to perform the counter flow washing. During the counter flow washing, first the filter is loaded with a primary counter flow washing pressure from the outer peripheral surface 6 of the porous body 42 to peel the deposit from the filtration membrane 45. Thereafter, the filter is loaded with a secondary counter flow washing pressure from the other opening portion (second opening portion) so that the deposit can be discharged and removed from the first opening portion.

The present invention will be described hereinafter more specifically in accordance with examples. However, the present invention is not limited to these examples.

### (Examples 1 to 3 and Comparative Examples 1 and 2)

As an aggregate, alumina sieved in such a manner as to have particle diameters of 5 to 300 µm was used. To this aggregate, feldspar having particle diameters of 0.5 to 5 µm was added as a sintering assistant, water was added as a dispersion medium, and methyl cellulose was added as an organic binder. Clay obtained by kneading was extruded to obtain a honeycomb formed body having a plurality of main flow paths. This formed body was dried, thereafter cut perpendicular to a flowing direction in such a manner as to have a predetermined length, and fired to obtain a honeycomb porous body having an inner diameter of 180 mm, a flow path inner diameter of 2.2 mm, a length of 1000 mm, and about 2000 main flow paths. A mean pore diameter of the porous body, measured by mercury porosimetry, was 10 µm.

Next, alumina sieved in such a manner as to have particle diameters of 0.5 to 10 µn was used, water was added as the dispersion medium, glass frit was added as the sintering assistant, and polysaccharide water-soluble gum was added as the organic binder to prepare a slurry for membrane production (slurry for intermediate membrane production). Membranes were formed on inner wall surfaces of the main flow paths of the porous body 32 using a membrane production apparatus 37 shown in FIG. 3, and were thereafter dried and fired to form intermediate membranes. Incidentally, to circulate the slurry 33 for membrane production (slurry for intermediate membrane production) in the main flow paths of the porous body 32, pressure on an outer peripheral surface 36 side was reduced by a vacuum pump P simultaneously with the circulation. Circulation fluxes at this time and pressure reduction degrees on the outer peripheral surface are shown in Table 1.

Next, titania sieved in such a manner as to have particle diameters of 0.1 to 1.0 µm was used, water was added as the dispersion medium, and polysaccharide water-soluble gum and polyvinyl alcohol were added as the organic binders to prepare a slurry for filtration membrane production. Membranes were formed on the surfaces of the intermediate membranes produced beforehand on the inner wall surfaces of the main flow paths of the porous body 32 using the membrane production apparatus 37 shown in FIG. 3, the membranes were thereafter dried and fired to form filtration membranes. Thus, ceramic filters (Examples 1 to 3 and Comparative Examples 1 and 2) were manufactured. Incidentally, to circulate the slurry 33 for membrane production (slurry for filtration membrane production) in the main flow paths of the porous body 32, the pressure on the outer peripheral surface 36 side was reduced by the vacuum pump P simultaneously with the circulation. The circulation fluxes at this time and the pressure reduction degrees on the outer peripheral surface are shown in Table 1. The mean pore diameter of the filtration membranes (including the intermediate membranes) measured by mercury porosimetry was 0.1 µm.

### (Comparative Example 1)

A ceramic filter (Comparative Example 1) was manufactured in the same manner as in Examples 1 to 3 and Comparative Examples 1 and 2 described above except that a slurry for intermediate membrane production and a slurry for filtration membrane production were circulated from one end face 4a toward the other end face 4b (see FIG. 3) and that a circulation flux and a pressure reduction degree on an outer peripheral surface were set to values shown in Table 1.

**(Table 1)**

| | | Ex. 1 | Ex. 2 | Ex. 3 | C.E. 1 | C.E. 2 | C.E. 3 |
|---|---|---|---|---|---|---|---|
| Intermediate membrane | Circulation flux (m/min) | 1 | 1 | 1 | 2 | 2 | 2 |
| | Pressure reduction degree (kPa) | -100 | -100 | -100 | -50 | -50 | -50 |
| Filtration membrane | Circulation flux (m/min) | 1 | 1 | 1 | 2 | 2 | 2 |
| | Pressure reduction degree (kPa) | -100 | -100 | -100 | -50 | -50 | -50 |

Moreover, as to each ceramic filter, Table 2 shows: membrane thicknesses (X) of filtration membranes in second opening portions (see FIG. 1(b)), membrane thicknesses (Y) of the filtration membranes in first opening portions (see FIG. 1(b)), average membrane thickness, X-Y, an average value (A) of opening diameters in the first opening portions, an average value (B) of opening diameters in the second opening portions, and (A-B)/B.

### (Actual Operation)

An actual operation was performed using a purification apparatus constituted by disposing in a housing the manufactured ceramic filters of Examples 1 to 3, and Comparative Examples 1 to 3. Specifically, water was drawn from an incoming water intake of a river in Chubu District, aggregated in accordance with a usual method, and thereafter filtered using the ceramic filters of Examples 1 to 3, and Comparative Examples 1 to 3. At this time, a filtration flux was 2 m/day, and counter flow washing was performed every four hours. The counter flow washing was performed on conditions that: (1) 1.51/m² of water was passed from the outer peripheral surface toward the filtration membrane under a pressure of 500 kPa to peel from the filtration membranes a trapped substance deposited in the flow paths; and (2) thereafter 0.51/m² of water was passed from the second opening portions toward the first opening portions under a blowing pressure of 150 kPa. At this time, the deposit discharged per counter flow washing had a dry weight of 25.2 to 152.1 g. Incidentally, ranges exist in the above-described numerical values because an amount of sludge of the treated water has a range. After operating the apparatus continuously for a month, blocked situations of the main flow paths of each ceramic filter were visually observed.

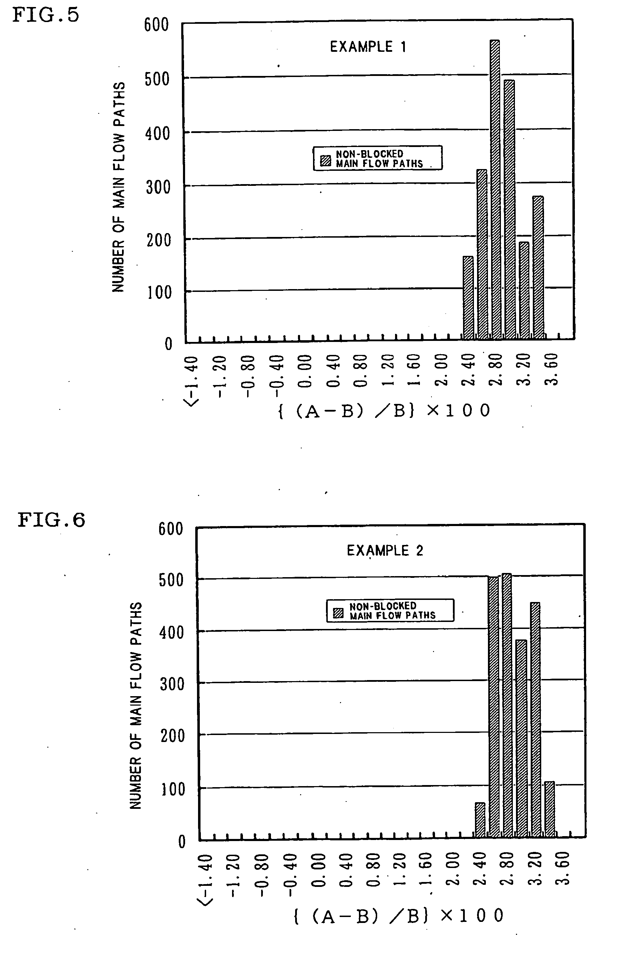

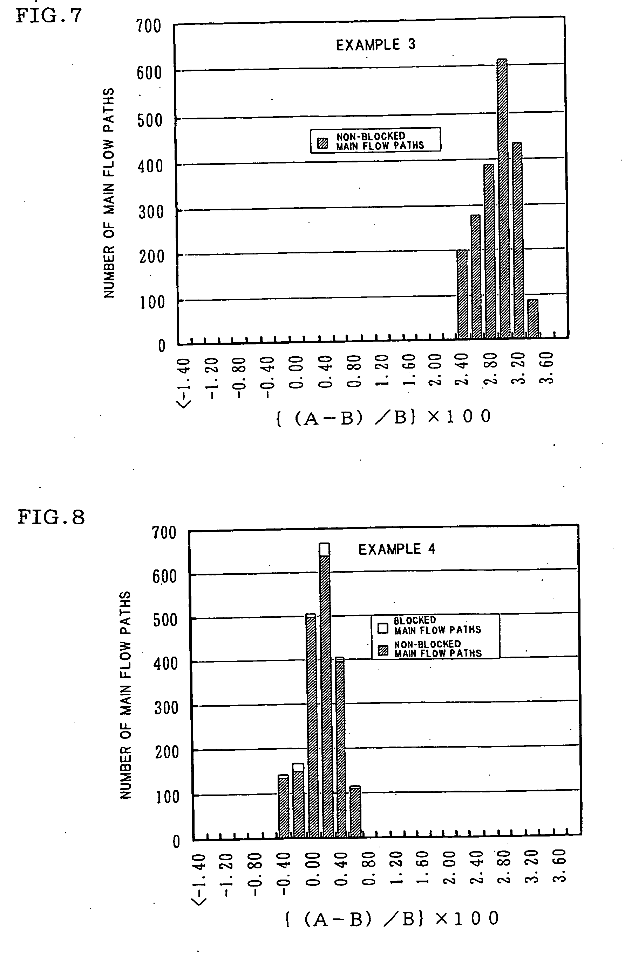

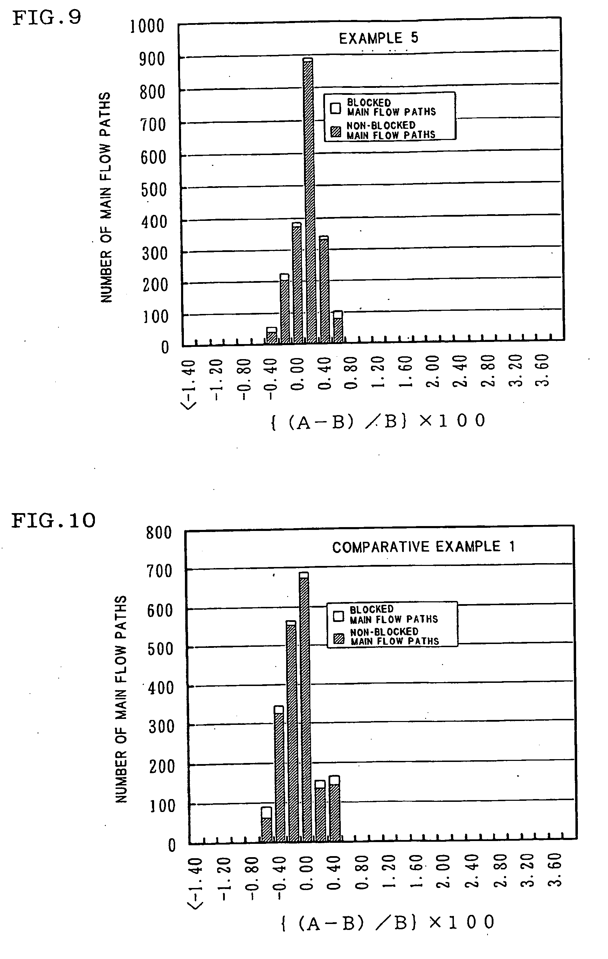

The main flow paths from which deposits were discharged and removed on the counter flow washing conditions of the above (1), (2) were assumed as "non-blocked main flow paths", the main flow paths whose deposits were not discharged or removed even under the counter flow washing conditions of the above (1), (2) were assumed as "blocked main flow paths", and the number of the main flow paths was measured for each ceramic filter. Table 2 shows the number of the blocked main flow paths, and a ratio of the blocked main flow paths (a ratio of the number of the blocked main flow paths with respect to that of the main flow paths). FIGS. 5 to 10 show graphs of counter flow washing results of the respective ceramic filters, in which the number of the main flow paths was plotted with respect to a value of "{(A-B)/B}×100".

**(Table 2)**

| | X (µm) | Y (µm) | Average membrane thickness (µm) | X-Y (µm) | A (µm) | B (µm) | (A-B)/B | Number of main flow paths | Number of blocked main flow paths | Ratio of blocked main flow paths (%) |
|---|---|---|---|---|---|---|---|---|---|---|
| Example 1 | 130 | 96 | 113 | 35 | 2489 | 2419 | 0.029 | 2000 | 0 | 0 |
| Example 2 | 131 | 97 | 114 | 34 | 2486 | 2418 | 0.028 | 2000 | 0 | 0 |
| Example 3 | 134 | 96 | 115 | 37 | 2487 | 2413 | 0.031 | 2000 | 0 | 0 |
| Comparative Example 1 | 116 | 114 | 115 | 2 | 2452 | 2448 | 0.002 | 2000 | 79 | 4.0 |
| Comparative Example 2 | 112 | 110 | 111 | 2 | 2460 | 2456 | 0.002 | 2000 | 95 | 4.8 |
| Comparative Example 3 | 110 | 111 | 110 | -1 | 2459 | 2461 | -0.001 | 2000 | 107 | 5.4 |

It is clear from the results shown in Table 2 and FIGS. 5 to 10 that, as to the ceramic filters in which the average value (A) of the opening diameters in the first opening portions is larger than the average value (B) of the opening diameters in the second opening portions, that is, the ceramic filters of Examples 1 to 3 and Comparative Examples 1 and 2 in which the diameters of the main flow paths in the cross section perpendicular to the flowing direction of the fluid to be purified are gradually reduced from the opening diameters in the first opening portions to those in the second opening portions, the number of the blocked main flow paths after performing the counter flow washing and the ratio of the blocked main flow paths are small, and the deposits are easily removed as compared with the ceramic filter of Comparative Example 1 in which conversely the value of A is smaller than that of B. Therefore, superiority of the ceramic filter of the present invention can be confirmed. Furthermore, it has been found that, as to the ceramic filters of Examples 1 to 3, all the deposits on the main flow paths are removed by the counter flow washing. Therefore, it is clear that when the values of A and B satisfy a relation of (A-B)/B≥0.025, it is further easy to remove the deposits by the counter flow washing.

### Industrial Applicability

As described above, in a ceramic filter of the present invention, since diameters of main flow paths in a cross section perpendicular to a flowing direction of the fluid to be purified are gradually reduced from opening diameters of first opening portions to those of second opening portions, a deposit on the filter can be easily removed by counter flow washing. Therefore, the filter is preferable as a filter for removing suspension substances, bacteria, powder dust and the like in liquid or gas, for example, in water treatment or exhaust gas treatment, or broad fields such as pharmaceutical and food fields.

## Claims

1. A ceramic filter comprising: a porous body (2) having two end faces (4a, 4b) and an outer peripheral surface (6) and having a plurality of main flow paths (3) for fluid to be purified which extend from one end face (4a) to the other end face (4b); and filtration membranes (5) arranged on inner wall surfaces of the main flow paths (3), the fluid to be purified that flows into the main flow paths (3) from opening portions (a₁, a₂, a₃) (first opening portions) in the one end face (4a) being allowed to permeate the inside of the porous body (2) to thereby purify the fluid, and being taken out as purified fluid from the outer peripheral surface (6) of the porous body (2), **characterized in that**
diameters of the main flow paths (3) in a cross section perpendicular to a flowing direction of the fluid to be purified are gradually reduced from opening diameters of the first opening portions (a₁, a₂, a₃) to opening diameters of opening portions (b₁, b₂, b₃) (second opening portions) in the other end face (4b),
wherein an average value (A) of the opening diameters of the first opening portions (a₁, a₂, a₃) and an average value (B) of the opening diameters of the second opening portions (b₁, b₂, b₃) satisfy a relation of (A-B)/B≥0.025.

2. A ceramic filter according to claim 1, wherein slit-shaped auxiliary flow paths (25) are formed in portions including the outer peripheral surface (6) of the porous body (2) so that a predetermined main flow path (specific main flow path) among the main flow paths (3) communicates with an external space, opening portions of both the end faces (4a, 4b) of the specific main flow path are sealed, and the fluid to be purified that flows into the main flow paths (3) from the opening portions (a₁, a₂, a₃) in the one end face (4a) is allowed to permeate the inside of the porous body (2) to thereby purify the fluid and is taken out as purified fluid from the outer peripheral surface (6) of the porous body (2) and exits of the auxiliary flow
paths (25).

## Patentansprüche

1. Keramikfilter mit: einem porösen Körper (2), der zwei Endflächen (4a, 4b) und eine Außenumfangsfläche (6) hat und der eine Vielzahl von Hauptströmungspfaden (3) für zu reinigendes Fluid hat, die sich von einer Endfläche (4a) zu der anderen Endfläche (4b) erstrecken; und Filtrationsmembranen (5), die an Innenwandflächen der Hauptströmungspfade (3) angeordnet sind, wobei dem zu reinigenden Fluid, das von Öffnungsabschnitten (a₁, a₂, a₃) (ersten Öffnungsabschnitten) in der einen Endfläche (4a) in die Hauptströmungspfade (3) strömt, ermöglicht wird, das Innere des porösen Körpers (2) zu durchdringen, wodurch das Fluid gereinigt wird, und als gereinigtes Fluid von den Außenumfangsflächen (6) des porösen Körpers (2) entnommen wird, **dadurch gekennzeichnet, dass**
Durchmesser der Hauptströmungspfade (3) in einem senkrecht zu einer Strömungsrichtung des zu reinigenden Fluids verlaufenden Schnitt von den Öffnungsdurchmessern der ersten Öffnungsabschnitte (a₁, a₂, a₃) zu Öffnungsdurchmessern der Öffnungsabschnitte (b₁, b₂, b₃) (zweiten Öffnungsabschnitten) in der anderen Endfläche (4b) allmählich verringert sind,
wobei ein Durchschnittswert (A) der Öffnungsdurchmesser der ersten Öffnungsabschnitte (a₁, a₂, a₃) und ein Durchschnittswert (B) der Öffnungsdurchmesser der zweiten Öffnungsabschnitte (b₁, b₂, b₃) eine Beziehung von (A-B) /B≥0,025 erfüllen.

2. Keramikfilter gemäß Anspruch 1, wobei schlitzförmige Hilfsströmungspfade (25) in Abschnitten ausgebildet sind, die die Außenumfangsfläche (6) des porösen Körpers (2) aufweisen, sodass ein vorbestimmter Hauptströmungspfad (ein spezifischer Hauptströmungspfad) unter den Hauptströmungspfaden (3) mit einem Außenraum in Verbindung ist, wobei Öffnungsabschnitte von den beiden Endflächen (4a, 4b) des spezifischen Hauptströmungspfads abgedichtet sind, und dem zu reinigenden Fluid, das von den Öffnungsabschnitten (a₁, a₂, a₃) in der einen Endfläche (4a) in die Hauptströmungspfade (3) strömt, ermöglicht wird, das Innere des porösen Körpers (2) zu durchdringen, um dadurch das Fluid zu reinigen, und als gereinigtes Fluid von der Außenumfangsfläche (6) des porösen Körpers (2) entnommen wird und aus den Hauptströmungspfaden (25) austritt.

## Revendications

1. Filtre céramique comprenant : un corps poreux (2) ayant deux faces d'extrémité (4a, 4b) et une surface périphérique extérieure (6) et ayant une pluralité de voies d'écoulement principales (3) pour un fluide à purifier qui s'étendent à partir d'une face d'extrémité (4a) à l'autre face d'extrémité (4b) ; et des membranes de filtration (5) agencées sur des surfaces de paroi interne des voies d'écoulement principales (3), le fluide à purifier qui s'écoule dans les voies d'écoulement principales (3) à partir de parties d'ouverture (a₁, a₂, a₃) (premières parties d'ouverture) dans la face d'extrémité (4a) étant autorisé à s'infiltrer à l'intérieur du corps poreux (2) pour purifier ainsi le fluide, et étant sorti en tant que fluide purifié à partir de la surface périphérique extérieure (6) du corps poreux (2), **caractérisé en ce que**
les diamètres des voies d'écoulement principales (3) dans une section transversale perpendiculaire à une direction d'écoulement du fluide à purifier sont progressivement réduits à partir des diamètres d'ouverture des premières parties d'ouverture (a₁, a₂, a₃) à des diamètres d'ouverture de parties d'ouverture (b₁, b₂, b₃) (deuxièmes parties d'ouverture) dans l'autre face d'extrémité (4b),
où une valeur moyenne (A) des diamètres d'ouverture des premières parties d'ouverture (a₁, a₂, a₃) et une valeur moyenne (B) des diamètres d'ouverture des deuxièmes parties d'ouverture (b₁, b₂, b₃) satisfont une relation de (A-B)/B≥ 0,025.

2. Filtre céramique selon la revendication 1, dans lequel des voies d'écoulement auxiliaires en forme de fentes (25) sont formées dans des parties comportant la surface périphérique extérieure (6) du corps poreux (2) de sorte qu'une voie d'écoulement principale prédéterminée (voie d'écoulement principale spécifique) parmi les voies d'écoulement principales (3) communique avec un espace extérieur, des parties d'ouverture des deux faces d'extrémité (4a, 4b) de la voie d'écoulement principale spécifique soient scellées, et le fluide à purifier qui s'écoule dans les voies d'écoulement principales (3) à partir des parties d'ouverture (a₁, a₂, a₃) dans la face d'extrémité (4a) soit autorisé à s'infiltrer à l'intérieur du corps poreux (2) pour purifier ainsi le fluide et soit sorti en tant que fluide purifié à partir de la surface périphérique extérieure (6) du corps poreux (2) et des sorties des voies d'écoulement auxiliaires (25).
